# EUROPÄISCHE PATENTSCHRIFT

(11) **EP 2 643 248 B1**
(45) Veröffentlichungstag und Bekanntmachung des Hinweises auf die Patenterteilung: **24.09.2014**
(21) Anmeldenummer: 11788334.8
(22) Anmeldetag: 23.11.2011
(51) Int. Cl.: B65G 21/22, B65G 39/20

(54) **FÖRDERSYSTEM, FÖRDERELEMENT UND FÜHRUNGSBAHN**
CONVEYING SYSTEM, CONVEYING ELEMENT, AND GUIDE TRACK
SYSTÈME DE TRANSPORT, ÉLÉMENT DE TRANSPORT ET BANDE DE GUIDAGE

(30) Priorität: 26.11.2010 CH 19892010
(43) Veröffentlichungstag der Anmeldung: 02.10.2013
(73) Patentinhaber: Ferag AG, 8340 Hinwil (CH)
(72) Erfinder: RUGE, Martin, CH-4656 Starrkirch-Wil (CH); FELIX, Markus, CH-8805 Richterswil ZH (CH)
(74) Vertreter: Frei Patent Attorneys
(86) Internationale Anmeldenummer: PCT/CH2011/000281
(87) Internationale Veröffentlichungsnummer: WO 2012/068694

(56) Entgegenhaltungen:
- EP-A1- 0 891 933
- DE-A1- 4 323 127
- DE-B- 1 194 319
- NL-B- 119 481

## Beschreibung

Die Erfindung bezieht sich auf das Gebiet der Fördertechnik, und insbesondere auf ein Fördersystem, ein Förderelement und eine Führungsbahn gemäss dem Oberbegriff der entsprechenden unabhängigen Patentansprüche.

### STAND DER TECHNIK

Fördersysteme weisen Förderelemente auf, welche miteinander verkettet oder einzeln entlang einer Förderbahn gefördert werden. Die Förderelemente weisen Mittel zum Fördern von Gegenständen als Stückgut (und nebst Waren auch Personen oder Tiere), oder als Schüttgut auf. Diese Mittel können Greifer oder andere zum Festhalten eines Gegenstandes ausgebildete Elemente sein, oder flächig ausgedehnte Elemente, auf oder in welchen die Gegenstände liegen. Solche flächig ausgedehnten Elemente sind beispielsweise Förderbänder, oder weisen verkettete, typischerweise starre Förderelemente auf, welche bezüglich zueinander verschiebbar sind, um durch Kurven fahren zu können. Die Förderelemente bilden eine im Wesentlichen flache Oberfläche, auf welcher das Fördergut gefördert wird. Diese verketteten Förderelemente sind beispielsweise als Mattenketten, Gliederbandketten, Scharnierbandketten, Plattenbandketten (flexbelts, chain belts, carrier chains) bekannt. Sie werden im Folgenden zusammenfassend als Mattenketten bezeichnet.

Je nach Art der Fördermittel werden diese unterschiedlich gelagert: Greifer sind beispielsweise mittels kugelgelagerter Rollen gelagert. Mattenketten werden beispielsweise flächig abgestützt und rutschen dabei auf Gleitschienen oder Gleitflächen. Dies führt, in Abhängigkeit der Belastung durch das Fördergut, zu hohen Reibungskräften sowie Verschleiss, und bedingt entsprechende Antriebskräfte zur Bewegung der Mattenkette, hohe Zugkräfte auf die Mattenkette. Andere Ausführungsformen von Mattenketten weisen, als Teil der Mattenkette selber, mitlaufende Rollen auf, welche auf einer Fläche rollen.

EP 1 070 012 B1 zeigt Kettenelemente für eine Mattenförderkette, ohne ein rollende Lagerung.

WO 90/02269 zeigt einen Wälzkörperkäfig mit Sätzen von jeweils drei oder auch nur zwei aneinander abrollenden Lagerkugeln, wobei jede der Lagerkugeln wiederum in einer Nut an der Innenseite einer Führungsschiene abrollt, welche den Wälzkörperkäfig teilweise umfängt. Durch die Lagerung in den Nuten ist der Wälzkörperkäfig linear verschiebbar und verdrehsicher in der Führungsschiene gelagert.

EP 1 009 693 B1 offenbart käfigartige Führungsschienen mit darin abrollenden Förderelementen. In einer Ausführungsform liegen ebenfalls drei aneinander abrollende Lagerkugeln vor, wobei jede der Lagerkugeln wiederum an zwei Stäben der Führungsschiene abrollt, damit die Förderelemente verdrehsicher laufen.

US 2,830,824 beschreibt einen Rollwagen, welcher auf einer ebenen Fläche in alle Richtungen verschiebbar ist und dazu auf mehreren Kugeln rollend gelagert ist, wobei jede dieser Kugeln wiederum an mehreren Lagerkugeln abrollt.

CH 663 773 A5 beschreibt eine Kugelgelenk-Gliederkette, welche in einer Führungsschiene zwischen zwei einander gegenüberliegenden Reihen von Kugeln gelagert ist.

NL 119 481 B offenbart ein Fördersystem nach dem Oberbegriff des Anspruchs 1, ein Förderelement nach dem Oberbegriff des Anspruchs 15, sowie einen Leiterkettentransporteur oder Trogkettenförderer mit verketteten sprossenförmigen Elementen, welche an seitlichen Enden entweder an feststehenden Rollen abrollen oder selber mitlaufende Wälzkörper aufweisen, welche an Führungsschienen links und rechts des Förderers abrollen. Von den Wälzkörpern rollt jeweils ein unterer an der Führungsschiene und an einem innen liegenden Wälzkörper ab. Der innen liegende Wälzkörper rollt am unteren und an einem oberen Wälzkörper ab, der obere Wälzkörper rollt nur am innen liegenden ab. Trogkettenförderer sind zur Förderung von Schüttgut vorgesehen.

DE 11 94 319 B zeigt einen Führungskanal nach dem Oberbegriff des Anspruchs 16, sowie einen kurvenläufigen Förderer mit parallel verlaufenden Führungsschienen. Die Führungsschienen weisen eine Innenwand auf, welche einem Kreisabschnitt folgt. Miteinander verkettete Elemente des Förderers sind mit torpedoförmigen Gleitschuhen in den Führungsschienen geführt.

US 2,952,145 offenbart ein Linear-Kugellager, in welchem ein Hohlkörper um einen Schaft angeordnet und entlang des Schaftes verschiebbar und verdrehsicher gelagert ist. Zwischen dem Hohlkörper und dem Schaft sind, in korrespondierend angeordneten Nuten, Kugeln jeweils paarweise angeordnet, so dass die Kugeln einerseits an Hohlkörper und Schaft, und andererseits aneinander abrollen.

Aus der DE 37 90 593 ist ein raumbeweglicher Förderer offenbart, mit einer Zugkette aus länglichen Gliedern, in welchen eine Lagerkugel angeordnet ist, welche zwischen vier Führungsschienen abrollt.

### DARSTELLUNG DER ERFINDUNG

Es ist Aufgabe der Erfindung, ein Fördersystem, ein Förderelement und ein Führungsbahn der eingangs genannten Art zu schaffen, welche eine leichtgängige, reibungsarme Bewegung ermöglicht. Eine weitere Aufgabe ist, eine einfache, leicht zu reinigende und ohne Schmiermittel einsetzbare Konstruktion zu schaffen.

Diese Aufgabe lösen ein Fördersystem, ein Förderelement und eine Führungsbahn mit den Merkmalen der entsprechenden unabhängigen Patentansprüche.

Das **Fördersystem** weist also Rollkörper mit jeweils einem Wälzkörperkäfig und Wälzkörpern auf, wobei die Wälzkörper in Ausnehmungen des Wälzkörperkäfigs und zum Abrollen in einem Führungskanal angeordnet sind, wobei jeweils zwei oder drei oder mehr Wälzkörper einen Rollensatz bilden, und die Wälzkörper eines Rollensatzes sowohl aneinander als auch am Führungskanal abrollen, und mindestens ein Rollensatz pro Rollkörper vorliegt. Dabei weist das Fördersystem mindestens zwei Führungskanäle auf, welche mit im wesentlichen gleich bleibendem Abstand zueinander verlaufen und zusammen eine Führungsbahn bilden, und es sind mindestens zwei Rollkörper mittels eines Verbindungselementes miteinander zu einem Förderelement verbunden. Dabei ist das Förderelement mit seinen mindestens zwei Rollkörpern in mindestens zwei Führungskanälen entlang der Führungsbahn bewegbar.

Die genannte Verbindung von Elementen kann form- kraft- oder stoffschlüssig sein und beispielsweise einstückig oder durch eine Schnappverbindung, Bajonettverbindung, Einklinken, Verhaken, Schrauben, Kleben, Schweissen, Nieten, etc. realisiert sein.

Es weist also das Fördersystem einen ersten und einen zweiten Führungskanal auf, und es rollt ein erster der beiden Rollkörper im ersten Führungskanal und ein zweiter der Rollkörper im zweiten Führungskanal. Die Mittelpunkte der Wälzkörper eines Rollensatzes liegen in einer Ebene, welche senkrecht zur Bewegungsrichtung des Wälzkörperkäfigs im Führungskanal verläuft. Bezüglich des Wälzkörperkäfigs bleiben die Wälzkörper ortsfest.

Im Gegensatz zu einem Wälzlager bekannter Art, wo beispielsweise Kugelkäfige bekannt sind, aber nur zur Beabstandung von Wälzkörpern eingesetzt werden, ist die Vorrichtung dazu ausgelegt, dass Lastkräfte über die Wälzkörperkäfige eingeleitet werden.

In einer bevorzugten Ausführungsform der Erfindung berührt jeder der Wälzkörper den Führungskanal jeweils nur in einem Punkt. Das heisst, jeder der Wälzkörper rollt entlang einer einzigen Linie am Führungskanal ab. Die steht im Gegensatz zum Stand der Technik gemäss den eingangs genannten WO 90/02269 und EP 1 009 693 B1. So kann eine Drehung des Rollkörpers um eine Achse parallel zur Förderrichtung ermöglicht werden.

Vorzugsweise stützen die Wälzkörper aneinander ab. Dabei liegen die Wälzkörpermittelpunkte auf einem Kreis in einer Ebene senkrecht zur Förderrichtung. Es rollen jeweils benachbarte Wälzkörper aneinander ab, und es stützen sich die Wälzkörper im Kreis nach innen hin gegenseitig ab; nach aussen hin sind sie durch den Führungskanal, an welchem sie abrollen. gehalten.

In einer bevorzugten Ausführungsform der Erfindung folgt eine Innenwand der Führungskanäle, an welcher die Rollkörper abrollen, einem Abschnitt eines Kreises. Mit anderen Worten bildet also ein Querschnitt durch eine Lauffläche der Führungskanäle einen Kreisabschnitt. Es liegt dabei, neben den Bereichen, in welchen die Innenwand einem kreisrunden Verlauf folgt, ein Schlitz vor, durch welchen eine Verbindung zwischen Rollkörper und Verbindungselement verläuft.

Es sind dadurch, d.h. wegen des kreisrunden Verlaufes, die einzelnen Rollkörper *nicht* verdrehsicher im jeweiligen Führungskanal geführt. Die Stabilisierung des Förderelementes gegen Verdrehen um die Förderrichtung geschieht hingegen durch das Vorhandensein der mindestens zwei Rollkörper pro Förderelement, und deren Verbindung durch das Verbindungselement. Indem die Rollkörper für sich alleine gesehen sich bezüglich der Führungskanäle um eine Achse parallel zur Förderrichtung drehen können, kann ihre Bewegung einem gekrümmten Lauf folgen, ohne dass eine besonders präzise Ausrichtung einer Verdrehung der Führungskanäle (um diese Achse) erforderlich ist.

In einer bevorzugten Ausführungsform der Erfindung sind die Führungskanäle Profilstangen, beispielsweise durch Biegen oder als Stranggussprofile hergestellt, beispielsweise aus einem Stahlwerkstoff, Aluminiumwerkstoff oder aus Kunststoff.

In einer bevorzugten Ausführungsform der Erfindung ist an den Führungskanälen als Teil des Profils einstückig eine seitliche Führung bezüglich einer durch die Förderelemente bewegte Förderfläche ausgebildet. Die Führung ist im montierten Zustand des Führungskanals im Wesentlichen nach oben gerichtet und bildet eine seitliche Begrenzung für die Bewegung Fördergut, also von Gegenständen, die auf der Förderfläche gefördert werden. Die Förderfläche ist durch ein Verbindungselement gebildet, welches beispielsweise eine Platte oder ein Kettenelement einer Mattenkette ist, welche mittels der Förderelemente entlang der Führungsbahn gefördert sind. Damit ist alleine durch die Führungskanäle und die eingesetzten Förderelemente die Förderbahn respektive sind deren Begrenzungen nach unten und nach den Seiten vollständig definiert.

Zum Aufbau des Fördersystems sind gegebenenfalls Träger, Stützen, Säulen etc. zur Positionierung der Bahn im Raum erforderlich, diese definieren aber nicht die Begrenzungen der Förderbahn, sondern nur deren Verlauf als Ganzem durch den Raum.

In einer bevorzugten Ausführungsform der Erfindung ist an den Führungskanälen als Teil des Profils einstückig ein Befestigungsprofil zur Befestigung der Führungskanäle ausgebildet. Dadurch ist die Konstruktion der Bahn weiter vereinfacht. Es müssen die Führungskanäle nicht weiter (durch beispielsweise Befestigungslöcher) konfektioniert werden, sondern können z.B. mittels Schrauben und Nutensteinen, welche am Befestigungsprofil verschiebbar einsetzbar sind, an Trägern befestigt werden.

In einer bevorzugten Ausführungsform der Erfindung ist das Profil aus Kunststoff hergestellt und weist in Bereichen, an welchen die Wälzkörper abrollen, Abrolleinlagen aus Metall auf, beispielsweise profilierte Bänder wie beispielsweise Streifen oder Drähte. Wenn also jeder der zwei oder mehr Wälzkörper entlang einer einzigen Linie am Führungskanal abrollt, so sind entlang den entsprechenden zwei oder mehr Linien die Abrolleinlagen angeordnet.

In einer bevorzugten Ausführungsform der Erfindung sind Schlitze der Führungskanäle, durch welche hindurch die Rollkörper mit dem Verbindungselement verbunden sind, im betriebsbereiten Zustand (also nach der Montage am Einsatzort) des Fördersystems nach unten hin offen. Damit ist es möglich, das Fördersystem durch Abspritzen zu reinigen, was für Anwendungen im Bereich der Produktion und Verarbeitung von medizinischen Produkten oder Nahrungsmitteln von besonderem Vorteil ist.

In einer bevorzugten Ausführungsform der Erfindung tragen die Förderelemente eine ebene Förderfläche, auf welcher Fördergut förderbar ist, oder weisen die Förderelemente Haltemittel zur hängenden Förderung von Fördergut auf. Das Prinzip des Fördersystems ist also grundsätzlich auf eine Vielzahl von Anwendungen hin anpassbar, wobei das verbindende konzeptionelle Element bleibt, dass eine Verdrehung um die Transportrichtung durch das Vorhandensein zweier in Richtung senkrecht zur Transportrichtung voneinander beabstandeter und in separaten Führungskanälen verschiebbarer Rollkörper verhindert wird.

Die separaten Führungskanäle können miteinander verbunden sein, und zwar form-kraft- oder stoffschlüssig, mit einteiligen öder mehrteiligen Elementen als Querträger.

In einer bevorzugten Ausführungsform der Erfindung weist ein Förderelement im Verbindungselement mindestens ein Ausgleichselement zum Ausgleich von Variationen im Abstand zwischen den Führungskanälen auf. Damit werden die Anforderung an die Genauigkeit der Führung verringert.

Es kann auch der Abstand zwischen den Führungskanälen derart gestaltet werden, dass die Förderelemente respektive das Ausgleichselement bei Verschiebung entlang der Führungsbahn dauernd unter einer Vorspannung stehen. Dies ist insbesondere dann zweckmässig, wenn nur zwei Wälzkörpern pro Rollensatz vorliegen.

In einer bevorzugten Ausführungsform der Erfindung weisen die Förderelemente mindestens eine Antriebskrafteinleitung zum Antrieb der Förderelemente auf. Das Antreiben umfasst sowohl das Beschleunigen wie auch das Abbremsen der Förderelemente, also die Übertragung von Energie in die Bewegung der Förderelemente wie auch das Entnehmen (Rekuperieren) von Energie aus dieser Bewegung.

In einer bevorzugten Ausführungsform der Erfindung weist das Fördersystem einen Antrieb auf, welcher aus zwei einander entgegen gesetzten Richtungen auf die Antriebskrafteinleitung einwirkt, so dass Kräfte des Antriebs auf die Förderelemente, die senkrecht zur Bewegungsrichtung wirken, sich kompensieren, und Kräfte der Antriebs, die parallel zur Bewegungsrichtung wirken, sich summieren. Das heisst, die Summe der Kräfte, die senkrecht zur Bewegungsrichtung wirkt, ist zumindest annähernd null.

Dies geschieht beispielsweise mittels einander bezüglich der Antriebskrafteinleitung paarweise gegenüber angeordneten Zahnrädern, Zahnriemen, Antriebsriemen ohne Verzahnung, Ketten, Rollenketten, etc. Alternativ kann auch die Krafteinleitung, von nur einer Seite her an die Antriebskrafteinleitung angreifen. Dabei kann eine allfällige Gegenkraft zur Kraft, welche die Antriebskrafteinleitung (nicht in Förderrichtung) auf die Förderelemente ausübt, durch die Führungskanäle und/oder die Schwerkraft aufgenommen werden. In anderen bevorzugten Ausführungsformen der Erfindung geschieht die Einleitung der Antriebskraft in einem Umlenkbereich der Führungsbahn, an der inneren oder an der äusseren Peripherie der Führungsbahn.

In einer bevorzugten Ausführungsform der Erfindung weist ein Förderelement eine Kupplung zur lösbaren Verbindung mit einem Transportelement und/oder für eine Schnappverbindung mit einem Transportelement auf. Damit ist es möglich, einerseits standardisierte Förderelemente als Massenprodukte herzustellen und andererseits diese mit speziellen Transportelementen entsprechend einer bestimmten Anwendung zu konfektionieren.

In einer bevorzugten Ausführungsform der Erfindung sind alle oder einzelne Gruppen der Förderelemente in Förderrichtung miteinander verkettet und bewegbar, oder sind die Förderelemente einzeln in der Führungsbahn in Förderrichtung verschiebbar ("Spontanfördersystem").

Ein **Förderelement** zur Verwendung im Fördersystem weist Rollkörper mit jeweils einem Wälzkörperkäfig und Wälzkörpern auf, wobei die Wälzkörper in Ausnehmungen des Wälzkörperkäfigs drehbar gelagert und zum Abrollen in einem Führungskanal vorgesehen sind, wobei jeweils zwei oder drei oder mehr Wälzkörper einen Rollensatz bilden, und mindestens ein Rollensatz pro Rollkörper vorliegt, wobei mindestens zwei Rollkörper mittels eines Verbindungselementes miteinander zu einem Förderelement verbunden sind, und das Förderelement mit seinen mindestens zwei Rollkörper in mindestens zwei Führungskanälen entlang einer Führungsbahn bewegbar ist. Dabei abrollen die Wälzkörper eines Rollensatzes jeweils sowohl aneinander als auch an ihrem Führungskanal.

Ein **Führungskanal** zur Verwendung im Fördersystem ist zur Aufnahme von im Führungskanal abrollenden Rollkörpern vorgesehen. Dabei
- folgt eine Innenwand des Führungskanals, welche zum Abrollen der Rollkörper vorgesehen ist, einem Abschnitt eines Kreises;
- weist der Führungskanal eine von der Aussenwand des Führungskanals wegführende und längs des Führungskanals führende Wand auf, welche beim Einsatz des Führungskanals in dem Fördersystem als seitliche Führung wirkt.

Die Längsachse ist dabei die Achse, welche sich in Längsrichtung des Führungskanals erstreckt, also der Richtung, entlang der das Profil des Führungskanals gezogen ist.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figuren 1-9: Elemente eines Fördersystems in verschiedenen Ausführungsformen;
- Figuren 10-11: die Anordnung von Wälzkörpern; und
- Figuren 12-15: Details von Fördersystemen mit Abrolleinlagen zum Abrollen der Wälzkörpern.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

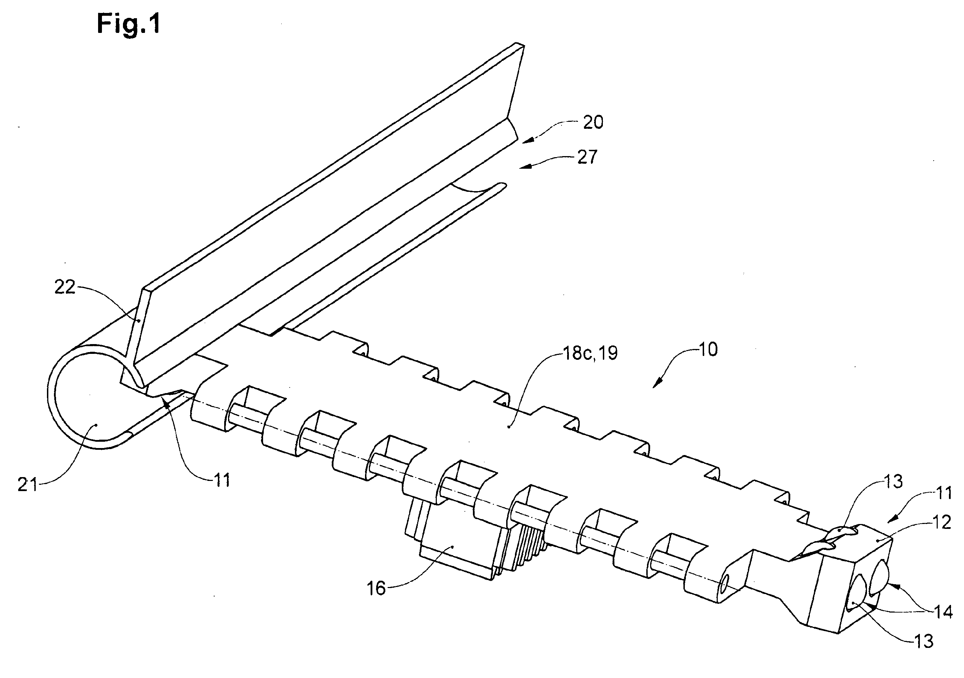

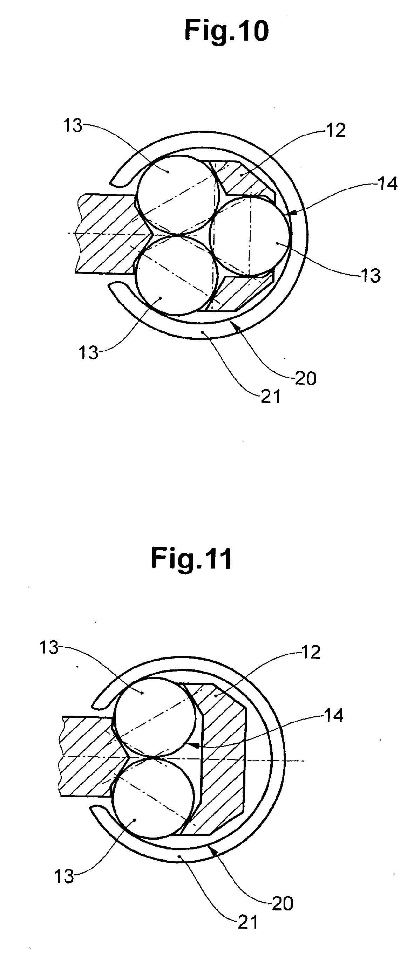

**Figur 1** zeigt einen Teil eines Fördersystems mit einem Förderelement 10 und einer Führungsbahn 20, wobei eine zweite Führungsbahn nicht gezeichnet ist. Das Förderelement 10 weist zwei Rollkörper 11 auf, wobei jeder Rollkörper 11 wiederum einen Wälzkörperkäfig 12 mit darin gelagerten Wälzkörpern 13 aufweist. Die Wälzkörper 13 sind hier und in den folgenden Beispielen Kugeln, können aber grundsätzlich auch eine andere Form aufweisen, beispielsweise die Form von Rotationsellipsoiden oder eine Tonnenform. Die Wälzkörper 13 sind in Gruppen von zwei oder drei aneinander abrollenden Wälzkörpern 13 zu Rollensätzen 14 gruppiert, in der **Figur 1** zu jeweils zwei Rollensätzen 14 je Rollkörper 11, wobei jeder Rollensatz 14 drei Wälzkörper 13 aufweist. (Das Abrollen der Wälzkörper 13 wird weiter unten im Zusammenhang mit den **Figuren 10** und **11** erläutert.)

Im Fördersystem sind die beiden Rollkörper 11 eines Förderelementes 10 jeweils zur Bewegung in und entlang einer Führungsbahn 20 angeordnet. Die Rollkörper 11 sind durch ein Verbindungselement 19 miteinander verbunden. Das Verbindungselement 19 definiert einen im wesentlichen konstanten Abstand zwischen den Rollkörpern 11 entsprechend einem Abstand zwischen den Führungsbahnen 20. Mehrere Elemente des Förderelementes 10, insbesondere die Wälzkörperkäfige 12 und das Verbindungselement 19 (und allfällige weitere Elemente) können einstückig aus einem harten Kunststoff gebildet sein.

Das Verbindungselement 19 ist in dieser Ausführungsform als Kettenelement 18c einer Mattenkette ausgebildet. Mehrere solcher Kettenelemente 18c können in bekannter Weise miteinander zu einer Mattenkette verbunden werden. Eine optionales Antriebskrafteinleitung 16 ist unterhalb des Verbindungselementes 19 angeordnet und erlaubt beispielsweise die Einleitung von Antriebskräften von unten oder von der Seite her, wozu eine Verzahnung an der Antriebskrafteinleitung 16 vorliegt.

Bezüglich der Verzahnung gilt hier und auch für die folgenden Beispiele: die Verzahnung ist als nach unten wie auch nach beiden Seiten der Förderrichtung hin gerichtet gezeichnet. Es kann aber auch nur eine Verzahnung in eine oder zwei dieser Richtungen vorliegen (nur nach unten/nur zur Seite/nur auf eine Seite, etc), oder es kann gar keine Antriebseinleitung vorliegen. Diese Krafteinleitung (nicht gezeichnet) kann beispielsweise mittels verzahnten oder flachen Bändern oder Zahnrädern oder Ketten geschehen.

Die Führungsbahn 20 weist einen Führungskanal 21 zur Aufnahme der Rollkörper 11 auf, wobei eine Verbindung zwischen Rollkörper 11 und Verbindungselement 19 durch einen Längsschlitz, im Folgenden einfach Schlitz 27 genannt, führt. Optional weist eine Führungsbahn 20 eine seitliche Führung 22 auf, welche eine Führung oder Abstützung für Gegenstände, welche auf oder mit den Förderelementen 10 gefördert werden, bildet. Die seitliche Führung 22 ist einstückig am Führungskanal 21 angeformt, beispielsweise indem die Führungsbahn 20 durch einen Strangformprozess hergestellt wird.

Die beschriebenen Elemente werden in den Ausführungsformen der folgenden Figuren unverändert oder in modifizierter Form gezeigt. Es werden dabei nur die veränderten Elemente beschrieben, für die unveränderten Elemente gilt jeweils auch die oben oder an anderer Stelle vorliegende Beschreibung. Es versteht sich, dass in den Ausführungsformen, bei welchen nur ein Förderelement gezeichnet ist, auch eine Folge von Förderelementen vorliegen kann, wobei diese miteinander verbunden respektive verkettet oder ohne Verbindung zueinander und mit Lücke zueinander bewegt sein können.

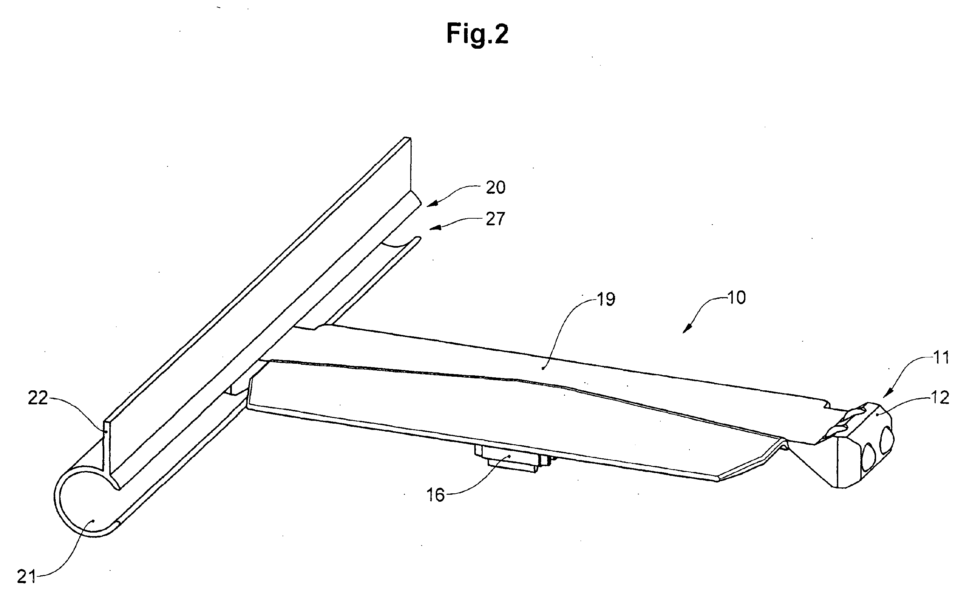

**Figur 2** zeigt ein Förderelement 10, bei welchem das Verbindungselement 19 eine angesetzte oder angeformte Platte 18b aufweist. Diese dient zum Tragen von geförderten Gegenständen und kann sich über das Verbindungselement 19 eines weiteren (nicht gezeichneten) anschliessend im Fördersystem 1 geförderten vorzugsweise gleich geformten Förderelementes schieben.

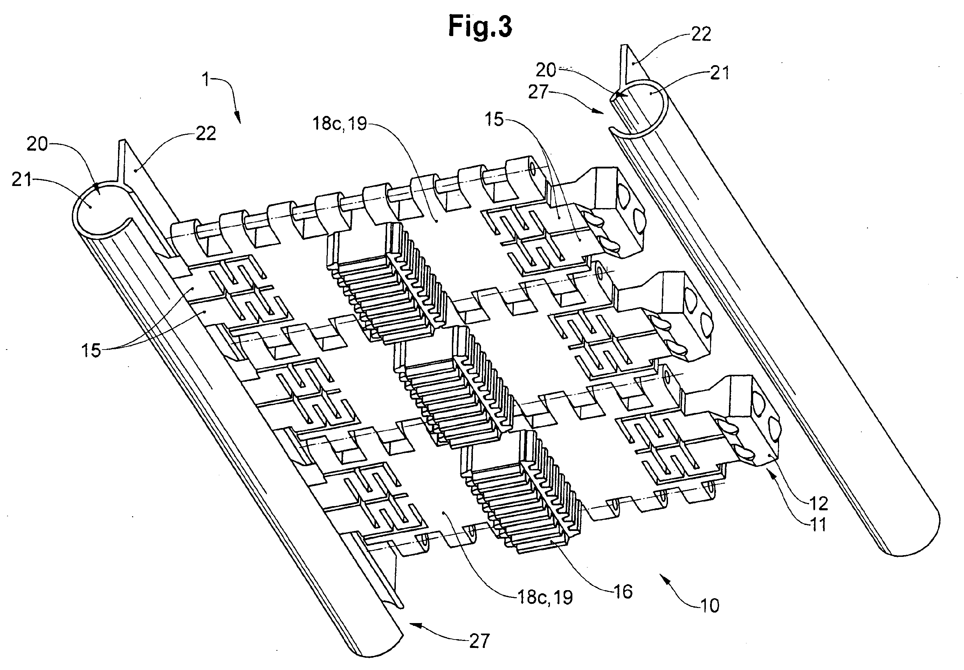

**Figur 3** zeigt einen Abschnitt eines Fördersystems 1 mit beiden Führungsbahnen 20. Die Förderelemente 10 sind als Kettenelemente 18c ausgebildet und miteinander zu einer Mattenkette verbunden. Die Verbindungselemente 19 weisen Ausgleichselemente 15 auf. Diese erlauben eine vorzugsweise elastische Bewegung der Rollkörper 11 bezüglich des Verbindungselementes 19 oder zumindest bezüglich des gegenüberliegenden Rollkörpers 11 des Förderelementes 10. Dies wiederum erlaubt einen Ausgleich von Ungenauigkeiten im Abstand zwischen dem Führungsbahnen 20. In der vorliegenden Ausführungsform sind die Ausgleichselemente 15 einstückig am Förderelement 10 ausgeformte dünne und optional mäandernde Abschnitte in einem Übergangsbereich zwischen Verbindungselement 19 und Rollkörpern 11. Vorzugsweise sind diese Abschnitte so gestaltet, dass die Elastizität in der Richtung des Abstandes zwischen den Führungsbahnen 20 am grössten ist, und die Elastizität in Richtung von Lastkräften, die auf die Förderelemente 10 wirken, hingegen möglichst klein ist. Dazu sind die Ausgleichselemente, wenn sie aus einem homogenen Material bestehen, beispielsweise im Querschnitt parallel zur Lastkraftrichtung stärker ausgedehnt und dadurch steifer als im Querschnitt senkrecht zur Lastkraftrichtung. Auch hier kann, wie bei der **Figur 1**, das ganze Förderelement 10 mit Ausnahme der eingesetzten Wälzkörper 13 einstückig gebildet sein, vorzugsweise aus Kunststoff.

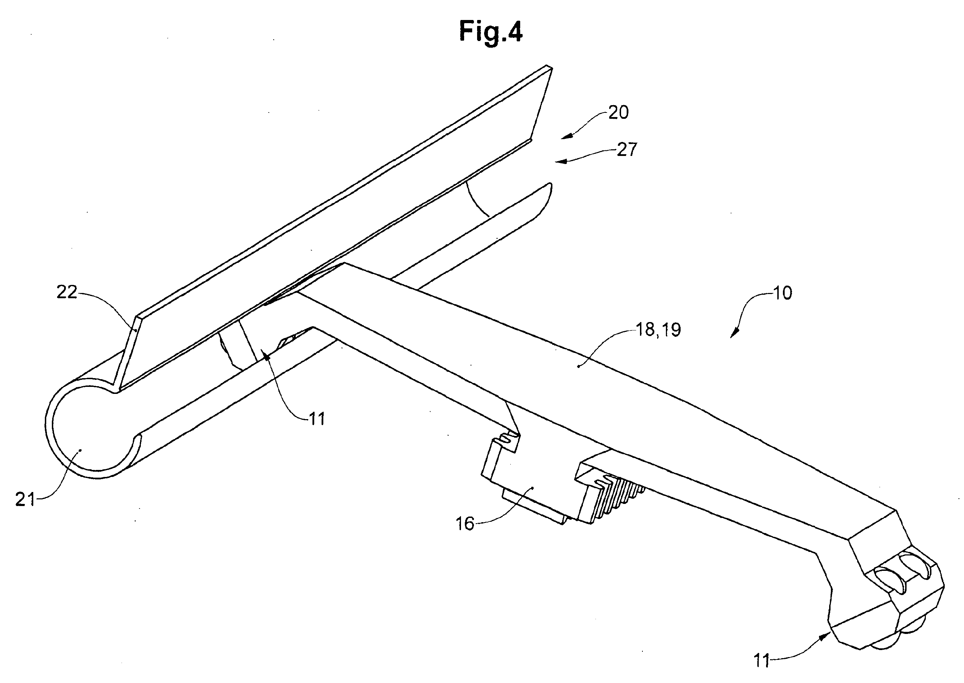

**Figur 4** zeigt ein Förderelement 10, bei welchem die Rollkörper 11 bezüglich des Verbindungselementes 19 nach unten abgeknickt sind. Entsprechend sind die Schlitze 27 nach oben gerichtet. Die Begriffe "oben" und "unten" sind bezüglich eines montierten Zustandes des Fördersystems 1 zu verstehen, bei denen auf den Förderelementen liegende Gegenstände gefördert werden, oder an den Förderelementen hängende Gegenstände mit Halteelementen wie Greifern gehalten werden. Zur einfacheren Reinigung können kleinere Schlitze an der Unterseite des Führungskanal 21 angeordnet sein, wobei dadurch aber die Stabilität des Führungskanals 21 nicht angegriffen werden darf.

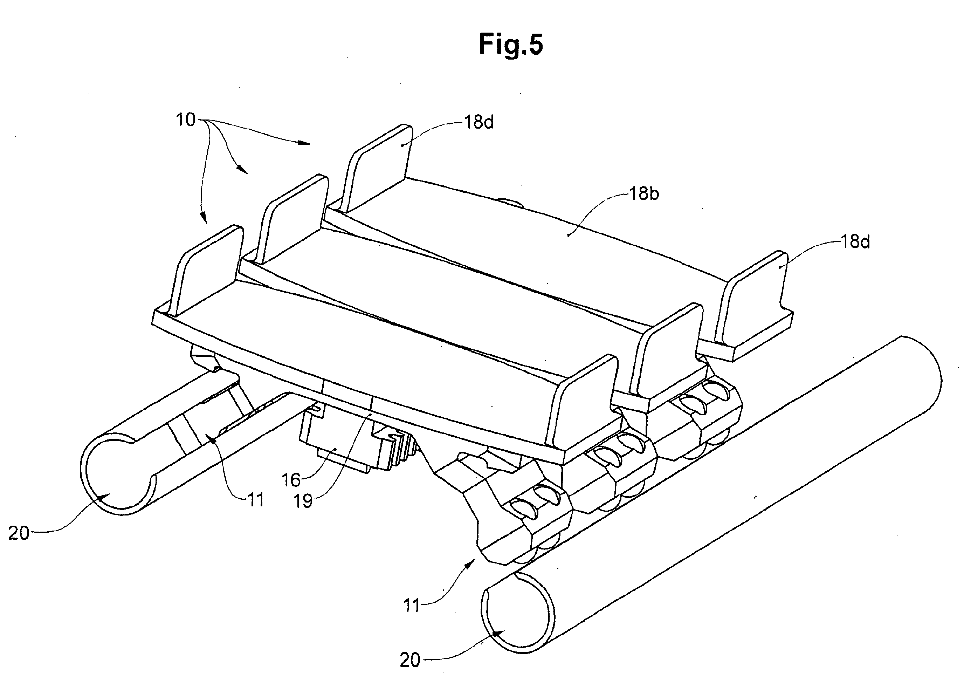

Das Verbindungselement 19 verjüngt sich, von seiner Mitte aus gesehen, auf die Rollkörper 11 hin. Dies ermöglicht dass die Führungsbahnen 20 um Seitenkurven geführt werden. Dies gilt beispielsweise auch für die Ausführungsformen der **Figuren 5** bis **9**.

**Figur 5** zeigt Förderelemente 10, welche seitlich über die Führungsbahnen 20 hinausragen (also senkrecht zu der Längsrichtung der Führungsbahnen 20 und damit des Fördersystems 1). Auf den Verbindungselementen 19 sind Platten 18b aufgesetzt oder angeformt, welche sich in seitlicher Richtung bis zum oder über den Bereich der Rollkörper 11 hinaus erstrecken. Die Platten 18b weisen an ihren seitlichen Enden angeformte oder angesetzte mitbewegte Abstützungen 18d auf, anstelle der fehlenden seitlichen Führung an den Führungskanälen 21.

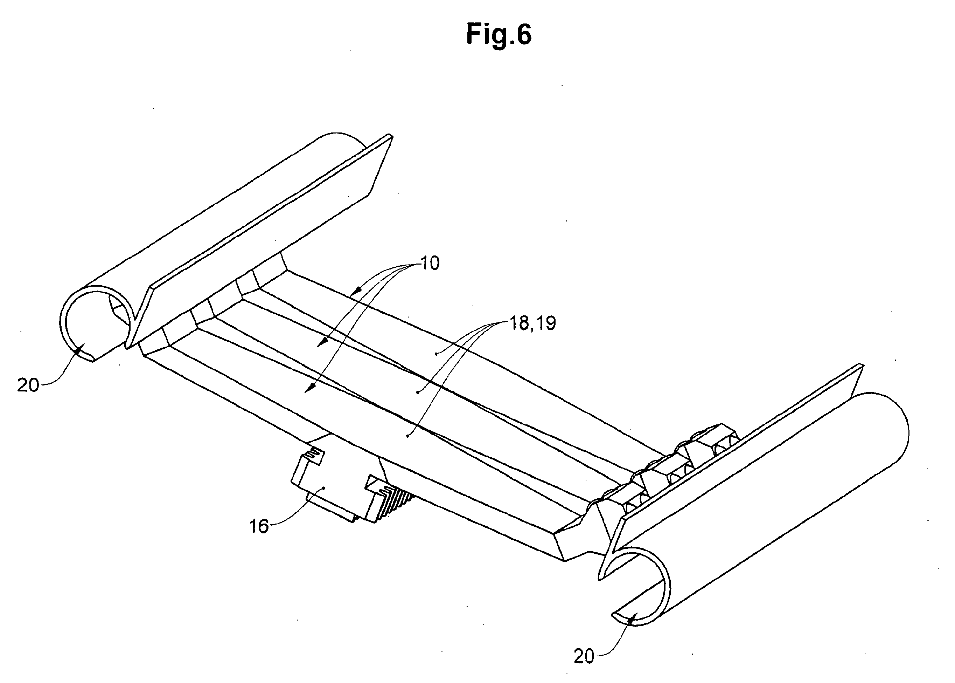

**Figur 6** zeigt Förderelemente 10, bei welchem die Rollkörper 11 bezüglich des Verbindungselementes 19 nach oben abgeknickt sind. Entsprechend sind die Schlitze 27 nach unten gerichtet. Diese Ausführungsform der Erfindung ist leicht zu reinigen, indem Schmutz sowie Reinigungsflüssigkeit durch die nach unten offenen Schlitze 27 herausfallen oder -fliessen können.

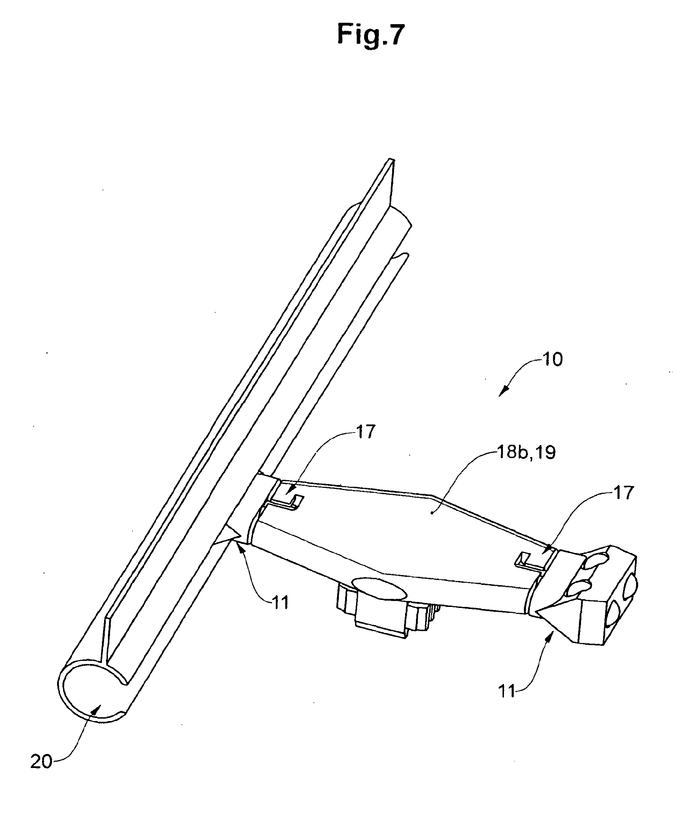

**Figur 7-9** zeigen Förderelemente 10 mit zwischen Verbindungselement 19 und Rollkörpern 11 angeordneten Kupplungen 17. Damit lassen sich unterschiedliche Verbindungselemente 19 und Rollkörper 11 produzieren und nach Bedarf kombinieren.

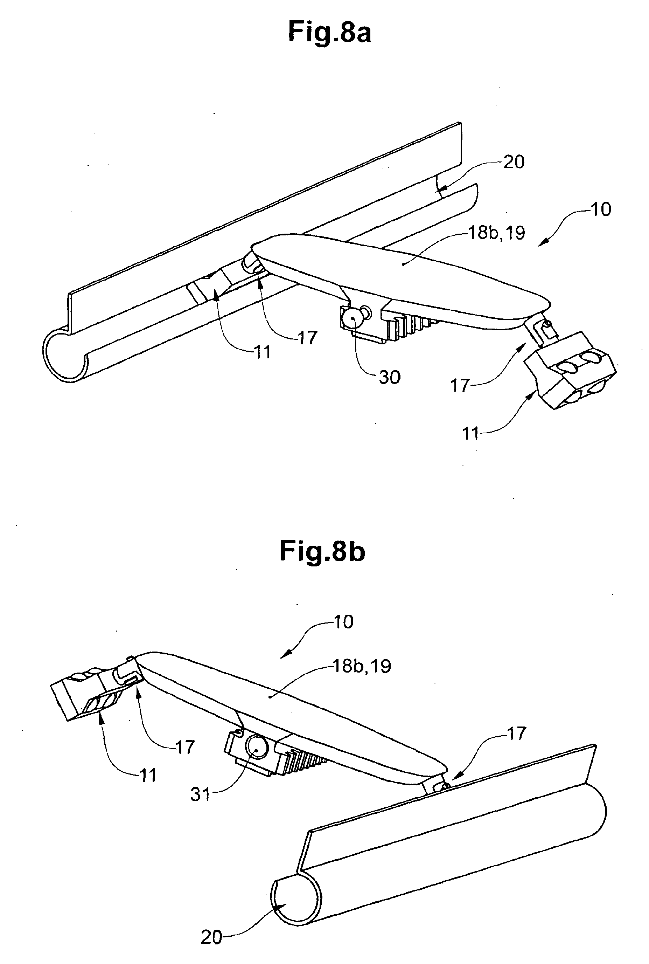

**Figur 8a** und **8b** zeigen zwei Ansichten eines Förderelementes 10 mit einer Gelenkkugel 30 auf der einen Seite (in Förderrichtung gesehen) und einer korrespondierenden Kugelgelenkpfanne 31 auf der anderen Seite. Damit sind mehrere gleich geformter Förderelemente 10 gelenkig miteinander verkettbar.

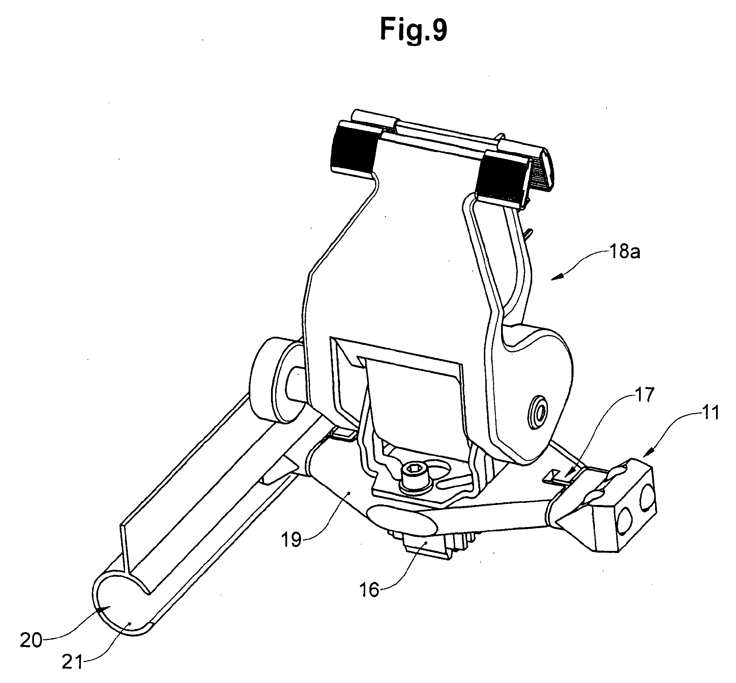

**Figur 9** zeigt einen auf einem Verbindungselement 19 aufgesetzten Halteelement oder Greifer 18a als Transportelement.

In den bisher gezeigten Ausführungsformen sind pro Wälzkörperkäfig 12 jeweils zwei Rollensätze 14 hintereinander angeordnet. Dies verleiht einem Förderelement 10 Stabilität bezüglich Verdrehen um die Verbindungslinie zwischen seinen Rollkörpern 11. Sind die Förderelemente so aneinander gekoppelt, dass sie sich nicht derart verdrehen können, so kann auf jeder Seite des Förderelementes 10 auch nur ein Rollensatz 14 pro Rollkörper 11 angeordnet sein. Umgekehrt können bei grösseren Lasten und bei entsprechend begrenzter Krümmung der Führungsbahnen 20 in Kurven auch mehr als zwei Rollensätze 14 pro Rollkörper 11 in Bewegungsrichtung hintereinander angeordnet sein.

**Figur 10** zeigt im Querschnitt durch einen Wälzkörperkäfig 12 einen einzelnen Rollensatz 14 mit aneinander abrollenden Kugeln als Wälzkörper 13. Die Wälzkörper 13 rollen sowohl aneinander als auch an der Innenseite des Führungskanals 21 ab. Ausnehmungen im Wälzkörperkäfig 12 sind an ihrer Aussenseite etwas kleiner als ein Durchmesser der Wälzkörper 13, so dass diese beim Einsetzen in den leicht elastischen Wälzkörperkäfig 12 in die Ausnehmungen einschnappen.

Die Konstruktion der Rollkörper 11, die Anordnung der Wälzkörper 13 im Rollkörper 11 sowie das Abrollen und das Einleiten von Lastkräften auf die Wälzkörper 13 und die Führungsbahn 20 ist in der bereits zitierten WO 90/02269 erläutert, welche hiermit in ihrer Gesamtheit durch Verweis aufgenommen wird, insbesondere die Erklärungen auf den Seiten 10 bis 16 und die dazu gehörigen Figuren.

**Figur 11** zeigt einen Rollensatz 14 mit zwei Wälzkörpern 13 im Querschnitt. Alle der bisher beschriebenen Ausführungsformen lassen sich auch mit solchen Rollensätzen 14 realisieren. Es sind aber die Anforderungen an die Genauigkeit der Parallelführung der Führungsbahnen höher, und/oder es liegen vorzugsweise Ausgleichselemente 15 vor, welche eine ausreichende Kompensation von Ungenauigkeiten zulassen und dabei insbesondere eine Vorspannung (Zugspannung) zwischen den Rollkörpern 11 eines Förderelementes 10 erzeugen.

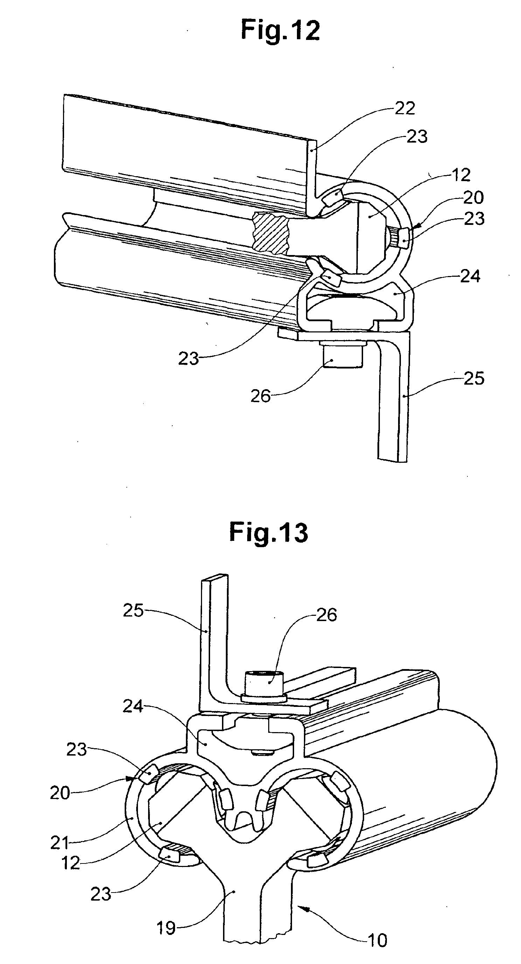

**Figuren 12-15** zeigen Details von Fördersystemen mit Abrolleinlagen 23 zum Abrollen der Wälzkörper 13 an der Innenseite der Führungskanäle 21. Die Abrolleinlagen 23 sind an dieser Innenseite eingelegt oder eingeformt oder eingeschweisst oder eingeklebt etc. und verlaufen in Längsrichtung des Führungskanals 21 zumindest in jenen Bereichen entlang des Umfanges des Führungskanals 21, in welchen die Wälzkörper 13 im Führungskanal 21 abrollen. Die Abrolleinlagen 23 bestehen aus einem härteren Material als der Führungskanal 21, oder aus einem Material, welches mit den Wälzkörpern 13 eine günstigere Materialpaarung zum Abrollen bildet. Damit können beispielsweise die Führungskanäle 21 aus Kunststoff und die Abrolleinlagen 23 aus einem harten Kunststoff oder aus Metall gefertigt sein.

Grundsätzlich ist es auch möglich, eine Lagerung ähnlich einer Abrolleinlage zu bilden, indem an jedem der zwei oder drei Abrolleinlagen jeweils einer oder zwei Drähte in Bewegungsrichtung parallel nebeneinander verlaufen, so dass jede der Rollen an einem solchen Draht oder einem Paar von Drähten abrollt.

Die **Figuren 12-15** zeigen ferner eine an einem Führungskanal 21 angeformtes Befestigungsprofil 24. Das Befestigungsprofil 24 ist also einstückig mit dem Führungskanal 21 und optional auch einer Führung 22 geformt. Mittels von beispielsweise einer Schraube mit Nutenstein 26 kann der Führungskanal 21 einfach und in flexibler Weise an einem Träger 25 montiert werden.

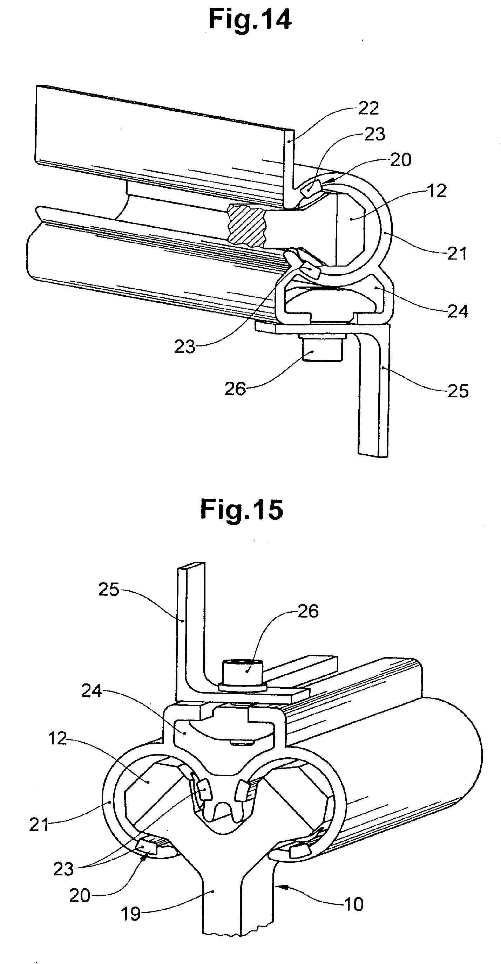

**Figuren 12** und **14** zeigen Wälzkörperkäfige 12 mit Rollensätzen mit drei respektive zwei Wälzkörpern, und entsprechend drei respektive zwei Abrolleinlagen 23 im Führungskanal 21.

**Figur 13** und **15** zeigen ebenfalls Wälzkörperkäfige 12 mit Rollensätzen mit drei respektive zwei Wälzkörpern, wobei die beiden Wälzkörperkäfige 12 eines Förderelementes 10 nahe beieinander angeordnet sind, so dass die entsprechenden beiden Führungskanäle 21 in demselben Profil geformt sind. Die beiden Führungskanäle 21 sind also einstückig miteinander und optional auch einem Befestigungsprofil 24 geformt.

Die Rollkörper 11 sind durch zwei Äste eines ein Y-förmigen Verbindungselementes 19 miteinander verbunden. Am dritten Ast des "Y" sind Transportelemente wie Greifer, Transportkörbe oder -Platten (nicht gezeichnet) angeordnet oder befestigbar. Die Zeichnung zeigen diesen dritten Ast nach unten hängend. In der Variante mit drei Wälzkörpern pro Rollensatz gemäss der **Figur 13** ist aber auch eine umgekehrte Variante realisierbar, bei welcher der dritte Ast nach oben zeigt.

## Patentansprüche

1. **Fördersystem** (1), aufweisend Rollkörper (11) mit jeweils einem Wälzkörperkäfig (12) und Wälzkörpern (13), wobei die Wälzkörper (13) in Ausnehmungen des Wälzkörperkäfigs (12) und zum Abrollen in einem Führungskanal (21) angeordnet sind, wobei jeweils zwei oder drei oder mehr Wälzkörper (13) einen Rollensatz (14) bilden, und mindestens ein Rollensatz (14) pro Rollkörper (11) vorliegt, wobei
• das Fördersystem (1) mindestens zwei Führungskanäle (21) aufweist, welche mit im wesentlichen gleich bleibendem Abstand zueinander verlaufen und zusammen eine Führungsbahn (20) bilden;
• mindestens zwei Rollkörper (11) mittels eines Verbindungselementes (19) miteinander zu einem Förderelement (10) verbunden sind, und das Förderelement (10) mit seinen mindestens zwei Rollkörpern (11) in mindestens zwei Führungskanälen (21) entlang der Führungsbahn (20) bewegbar ist.
**dadurch gekennzeichnet, dass** die Wälzkörpern (13) eines Rollensatzes (14) sowohl aneinander als auch an ihrem Führungskanal (21) abrollen.

2. Fördersystem (1) gemäss Anspruch 1, wobei jeder der Wälzkörper (13) den Führungskanal (21) jeweils nur in einem Punkt berührt.

3. Fördersystem (1) gemäss Anspruch 1 oder 2, wobei eine Innenwand der Führungskanäle (21), an welcher die Rollkörper (11) abrollen, einem Abschnitt eines Kreises folgt.

4. Fördersystem (1) gemäss einem der vorangehenden Ansprüche, wobei die Führungskanäle (21) Profilstangen sind.

5. Fördersystem (1) gemäss einem der vorangehenden Ansprüche, wobei an den Führungskanälen (21) als Teil des Profils einstückig eine seitliche Führung (22) bezüglich einer durch die Förderelemente (10) bewegte Förderfläche ausgebildet ist.

6. Fördersystem (1) gemäss Anspruch einem der vorangehenden Ansprüche, wobei an den Führungskanälen (21) als Teil des Profiles einstückig ein Befestigungsprofil (24) zur Befestigung der Führungskanäle (21) ausgebildet ist.

7. Fördersystem (1) gemäss einem der vorangehenden Ansprüche, wobei die Führungskanäle (21) aus Kunststoff hergestellt ist und in Bereichen, an welchen die Wälzkörper (13) abrollen, Abrolleinlagen (23) aus Metall aufweisen.

8. Fördersystem (1) gemäss einem der vorangehenden Ansprüche, wobei Schlitze der Führungskanäle (21), durch welche hindurch die Rollkörper (11) mit dem Verbindungselement (19) verbunden sind, im betriebsbereiten Zustand des Fördersystems (1) nach unten hin offen sind.

9. Fördersystem (1) gemäss einem der vorangehenden Ansprüche, wobei die Förderelemente (10) eine ebene Förderfläche aufweisen, auf welcher Fördergut förderbar ist, oder die Förderelemente (10) Haltemittel zur hängenden Förderung von Fördergut aufweisen.

10. Fördersystem (1) gemäss einem der vorangehenden Ansprüche, wobei ein Förderelement (10) im Verbindungselement (19) mindestens ein Ausgleichselement (15) zum Ausgleich von Variationen im Abstand zwischen den Führungskanälen (21) aufweist.

11. Fördersystem (1) gemäss einem der vorangehenden Ansprüche, wobei die Förderelemente (10) eine Antriebskrafteinleitung (16) zum Antrieb der Förderelemente (10) aufweisen.

12. Fördersystem (1) gemäss einem der vorangehenden Ansprüche, aufweisend einen Antrieb, welcher aus zwei einander entgegen gesetzten Richtungen auf die Antriebskrafteinleitung (16) einwirkt, so dass Kräfte des Antriebs auf die Förderelemente (10), die senkrecht zur Bewegungsrichtung wirken, sich kompensieren, und Kräfte der Antriebs, die parallel zur Bewegungsrichtung wirken, sich summieren.

13. Fördersystem (1) gemäss einem der vorangehenden Ansprüche, wobei ein Förderelement (10) eine Kupplung (17) zur lösbaren Verbindung mit einem Transportelement (18, 18a, 18b, 18c, 18d) und/oder für eine Schnappverbindung mit einem Transportelement (18, 18a, 18b, 18c, 18d) aufweist.

14. Fördersystem (1) gemäss einem der vorangehenden Ansprüche, wobei alle oder einzelne Gruppen der Förderelemente (10) in Förderrichtung miteinander verkettet und bewegbar sind, oder wobei die Förderelemente (10) einzeln in der Führungsbahn (20) in Förderrichtung verschiebbar sind.

15. **Förderelement** (10) zur Verwendung im Fördersystem (1) gemäss einem der vorangehenden Ansprüche, aufweisend Rollkörper (11) mit jeweils einem Wälzkörperkäfig (12) und Wälzkörpern (13), wobei die Wälzkörper (13) in Ausnehmungen des Wälzkörperkäfigs (12) drehbar gelagert und zum Abrollen in einem Führungskanal (21) vorgesehen sind, wobei jeweils zwei oder drei oder mehr Wälzkörper (13) einen Rollensatz (14) bilden, und mindestens ein Rollensatz (14) pro Rollkörper (11) vorliegt, wobei
• mindestens zwei Rollkörper (11) mittels eines Verbindungselementes (19) miteinander zu einem Förderelement (10) verbunden sind, und das Förderelement (10) mit seinen mindestens zwei Rollkörpern (11) in mindestens zwei Führungskanälen (21) entlang einer Führungsbahn (20) des Fördersystems (1) bewegbar ist,
**dadurch gekennzeichnet, dass** die Wälzkörper (13) eines Rollensatzes (14) sowohl aneinander als auch an ihrem Führungskanal (21) abrollen.

16. **Führungskanal** (21) zur Verwendung im Fördersystem (1) gemäss einem der Ansprüche 1 bis 14, wobei der Führungskanal (21) zur Aufnahme von im Führungskanal (21) abrollenden Rollkörpern (11) vorgesehen ist, und wobei
eine Innenwand des Führungskanals (21), welche zum Abrollen der Rollkörper (11) vorgesehen ist, einem Abschnitt eines Kreises folgt; **dadurch gekennzeichnet, dass** der Führungskanal (21) eine von der Aussenwand des Führungskanals wegführende und längs des Führungskanals führende Wand aufweist, welche beim Einsatz des Führungskanals (21) in dem Fördersystem (1) als seitliche Führung (22) wirkt.

## Claims

1. A conveying system (1), comprising rolling bodies (11) each with a rolling element cage (12) and rolling elements (13), wherein the rolling elements (13) are arranged in recesses of the rolling element cage (12) and for rolling in a guide channel (21), wherein in each case two or three or more rolling elements (13) form a roller set (14), and at least one roller set (14) is present per rolling body (11), wherein
• the conveying system (1) comprises at least two guide channels (21) which run at an essentially constant distance to one another and together form a guide path (20);
• at least two rolling bodies (11) are connected to one other into a conveying element (10) by way of a connection element (1), and the conveying element (10) with its at least two rolling bodies (11) is movable in at least two guide channels (21) along the guide path (20).
**characterised in that** the rolling elements (13) of a roller set (14) roll on one another as well as on the guide channel (21).

2. A conveying system (1) according to claim 1, wherein each of the rolling elements (13) contacts the guide channel (21) in each case at only one point.

3. A conveying system (1) according to claim 1 or 2, wherein an inner wall of the guide channels (21), on which the rolling bodies (11) roll, follows a section of a circle.

4. A conveying system according to one of the preceding claims, wherein the guide channels (21) are profile rods.

5. A conveying system (1) according to one of the preceding claims, wherein a guide (22) which is lateral with respect to a conveying surface moved by the conveying elements (10), is formed as one piece on the guide channels (21) as part of the profile.

6. A conveying system (1) according to one of the preceding claims, wherein a fastening profile (24) for fastening the guide channels (21) is formed as one piece on the guide channels (21) as part of the profile.

7. A conveying system (1) according to one of the preceding claims, wherein the guide channels (21) are manufactured of plastic and, in regions, on which the rolling elements (13) roll, comprise roller inlays (23) of metal.

8. A conveying system (1) according to one of the preceding claims, wherein slots of the guide channels (21), through which the rolling bodies (11) are connected to the connection element (19), are open downwards in the operationally ready condition of the conveying system (1).

9. A conveying system (1) according to one of the preceding claims, wherein the conveying elements (10) comprise a planar conveying surface, on which conveyed products can be conveyed, or the conveying elements (10) comprise holding means for the hanging conveying of conveyed products.

10. A conveying system (1) according to one of the preceding claims, wherein a conveying element (10) in the connection element (19) comprises at least one compensation element (15) for compensating variations in the distance between the guide channels (21).

11. A conveying system (1) according to one of the preceding claims, wherein the conveying elements (10) comprise a drive force introduction (16) for the drive of the conveying elements (10).

12. A conveying system (1) according to one of the preceding claims, comprising a drive, which acts on the drive force introduction (16) from two directions, which are opposite to one another, so that forces of the drive onto the conveying elements (10), which act perpendicularly to the movement direction, compensate one another, and forces of the drive, which act parallel to the movement direction, cumulate.

13. A conveying system (1) according to one of the preceding claims, wherein a conveying element (10) comprise a coupling (17) for the releasable connection to a transport element (18, 18a, 18b, 18c, 18d) and/or for a snap connection to a transport element (18, 18a, 18b, 18c, 18d).

14. A conveying system (1) according to one of the preceding claims, wherein all or individual groups of the conveying elements (10) are linked to one another and are movable, in the conveying direction, or wherein the conveying elements (10) are individually displaceable in the guide path (20) in the conveying direction.

15. A **conveying element** (10) for use in the conveying system (1) according to one of the preceding claims, comprising rolling bodies (11), each with a rolling element cage (12) and rolling elements (13), wherein the rolling elements (13) are rotatably mounted in recesses of the rolling element cage (12) and are designed for rolling in a guide channel (21), wherein in each case two or three or more rolling elements (13) form a roller set (14), and at least one roller set (14) is present per rolling body (11),
wherein
• at least two rolling bodies (11) are connected to one another into a conveying element (10) by way of a connection element (19), and the conveying element (10) with its at least two rolling bodies (11) is movable in at least two guide channels (21) along a guide path (20) of the conveying system (1),
**characterised in that** the rolling elements (13) of a roller set (14) roll on one another as well as on the guide channel (21).

16. A **guide channel** (21) for use in the conveying system (1) according to one of the claims 1 to 14, wherein the guide channel (21) is designed for receiving rolling bodies (11) rolling in the guide channel (21) and wherein an inner wall of the guide channel (21), which is designed for the roller bodies (11) rolling on it, follows a section of a circle, **characterised in that** the guide channel (21) comprises a wall, which leads away from the outer wall of the guide channel and leads along the guide channel, which acts as a lateral guide (22) when the guide channel (21) is used in the conveying system (1).

## Revendications

1. Système de transport (1) présentant des corps de roulement (11) dotés chacun d'une cage (12) de corps de rouleau et de corps de rouleau (13),
les corps de rouleau (13) étant disposés dans des découpes ménagées dans la cage (12) de corps de rouleau et pouvant rouler dans un canal de guidage (21),
deux, trois ou plusieurs corps de rouleau (13) formant un jeu de roulement (14),
au moins un jeu de rouleaux (14) étant prévu pour chaque corps de roulement (11),
le système de transport (1) présentant au moins deux canaux de guidage (21) qui s'étendent à une distance mutuelle essentiellement constante et forment ensemble une piste de guidage (20),
au moins deux corps de roulement (11) étant reliés ensemble au moyen d'un élément de liaison (19) pour former un élément de transport (10) et l'élément de transport (10) pouvant être déplacé par ses deux ou plusieurs corps de roulement (11) dans au moins deux canaux de guidage (21) le long de la piste de guidage (20) dans au moins deux canaux de guidage (21), **caractérisé en ce que**
les corps de rouleau (13) d'un jeu de rouleaux (14) roulent à la fois l'un contre l'autre et dans leur canal de guidage (21).

2. Système de transport (1) selon la revendication 1, dans lequel chacun des corps de rouleau (13) touche le canal de guidage (21) en un seul point.

3. Système de transport (1) selon les revendications 1 ou 2, dans lequel une paroi intérieure des canaux de guidage (21) sur laquelle les corps de roulement (11) roulent suit un segment de cercle.

4. Système de transport (1) selon l'une des revendications précédentes, dans lequel les canaux de guidage (21) sont des barres profilées.

5. Système de transport (1) dans lequel un guide latéral (22) est formé d'un seul tenant sur les canaux de guidage (21) en tant que partie du profil de manière à former une surface de transport déplacée par les éléments de transport (10).

6. Système de transport (1) selon l'une des revendications précédentes, dans lequel un profilé de fixation (24) qui fixe les canaux de guidage (21) est formé sur les canaux de guidage (21) d'un seul tenant en tant que partie du profilé.

7. Système de transport (1) selon l'une des revendications précédentes, dans lequel les canaux de guidage (21) sont réalisés en matière synthétique et présentent des garnitures de roulement (23) en métal dans les zones sur lesquelles les corps de rouleau (13) roulent.

8. Système de transport (1) selon l'une des revendications précédentes, dans lequel des fentes des canaux de guidage (21) à travers lesquelles les corps de roulement (11) sont raccordés à l'élément de liaison (19) sont ouvertes vers le bas lorsque le système de transport (1) est en position prêt à l'emploi.

9. Système de transport (1) selon l'une des revendications précédentes, dans lequel les éléments de transport (10) présentent une surface plane de transport sur laquelle un produit peut être transporté ou dans lequel les éléments de transport (10) présentent des moyens de maintien qui permettent de transporter des produits suspendus.

10. Système de transport (1) selon l'une des revendications précédentes, dans lequel un élément de transport (10) prévu dans l'élément de liaison (19) présente au moins un élément de compensation (15) qui compense les variations de distance entre les canaux de guidage (21).

11. Système de transport (1) selon l'une des revendications précédentes, dans lequel les éléments de transport (10) sont dotés d'une introduction (16) de force d'entraînement qui entraîne les éléments de transport (10).

12. Système de transport (1) selon l'une des revendications précédentes, présentant un entraînement qui agit dans deux directions mutuellement opposées sur l'introduction (16) de force d'entraînement de telle sorte que les forces de l'entraînement qui agissent sur les éléments de transport (10) perpendiculairement à la direction du déplacement se compensent et que les forces de l'entraînement qui agissent parallèlement à la direction de déplacement s'additionnent.

13. Système de transport (1) selon l'une des revendications précédentes, dans lequel un élément de transport (10) présente un accouplement (17) qui permet une liaison libérable avec un élément de transport (18, 18a, 18b, 18c, 18d) et/ou une liaison encliquetable avec un élément de transport (18, 18a, 18b, 18c, 18d).

14. Système de transport (1) selon l'une des revendications précédentes, dans lequel tous les éléments de transport (10) ou certains groupes d'éléments de transport sont enchaînés les uns aux autres et déplaçables dans la direction de transport ou dans lequel les éléments de transport (10) peuvent se déplacer séparément dans la direction de transport dans la piste de guidage (20).

15. Elément de transport (10) destiné à être utilisé dans le système de transport (1) selon l'une des revendications précédentes et présentant des corps de roulement (11) qui présentent chacun une cage (12) de corps de rouleau et des corps de rouleau (13),
les corps de rouleau (13) étant montés à rotation dans des découpes de la cage (12) de corps de rouleau et étant prévus pour rouler dans un canal de guidage (21),
deux, trois ou plusieurs corps de rouleau (13) formant un jeu de rouleau (14) et au moins un jeu de rouleau (14) étant prévu pour chaque corps de roulement (11),
au moins deux corps de roulement (11) étant reliés l'un à l'autre au moyen d'un élément de liaison (19) pour former un élément de transport (10) et l'élément de transport (10) pouvant être déplacé par ses deux ou plusieurs corps de roulement (11) dans au moins deux canaux de guidage (21) le long d'une piste de guidage (20) du système de transport (1),
**caractérisé en ce que**
les corps de rouleau (13) d'un jeu de rouleau (14) roulent à la fois l'un contre l'autre et dans leur canal de guidage (21).

16. Canal de guidage (21) destiné à être utilisé dans le système de transport (1) selon l'une des revendications 1 à 14, le canal de guidage (21) étant prévu pour reprendre des corps de roulement (11) qui roulent dans le canal de guidage (21),
une paroi intérieure du canal de guidage (21) prévue pour le roulement des corps de roulement (11) suivant un segment de cercle,
**caractérisé en ce que**
le canal de guidage (21) présente une paroi qui s'éloigne de la paroi extérieure du canal de guidage, qui conduit le long du canal de guidage et qui agit comme guide latéral (22) lorsque le canal de guidage (21) est utilisé dans le système de transport (1).
